# NEUE EUROPÄISCHE PATENTSCHRIFT

(11) **EP 1 114 806 B2**
(45) Veröffentlichungstag und Bekanntmachung des Hinweises auf die Entscheidung über den Einspruch: **02.10.2013**
(45) Hinweis auf die Patenterteilung: 29.11.2006
(21) Anmeldenummer: 01100383.7
(22) Anmeldetag: 05.01.2001
(51) Int. Cl.: C04B 41/65, E04D 1/04, E04D 1/28

(54) **Verwendung wässriger Polymerdispersionen zur Modifizierung mineralischer Beschichtungen für Betondachsteine**
Use of aqueous polymer dispersions for modifying mineral coatings for concrete roof tiles
Utilisation de dispersions aqueuses de polymères pour modifier des enduits minéraux pour des tuiles en béton

(30) Priorität: 07.01.2000 DE 10000367
(43) Veröffentlichungstag der Anmeldung: 11.07.2001
(73) Patentinhaber: BASF SE, 67056 Ludwigshafen (DE)
(72) Erfinder: Schwartz, Manfred, 67227 Frankenthal (DE); Bechert, Bertold, 67269 Grünstadt (DE); Denu, Hans-Jürgen, 67159 Friedelsheim (DE); Wistuba, Eckehardt, 67098 Bad Dürkheim (DE)
(74) Vertreter: Reitstötter - Kinzebach

(56) Entgegenhaltungen:
- EP-A- 0 915 071
- WO-A-98/35995
- WO-A1-98/35995
- DE-A- 3 932 573
- DE-A- 4 341 260

## Beschreibung

Die vorliegende Erfindung betrifft die Verwendung von Polymerdispersionen mit einer Glasübergangstemperatur im Bereich von -20 bis +80°C, worin das Polymer aus ethylenisch ungesättigten Monomeren aufgebaut ist, zur Modifizierung zementgebundener, mineralischer Beschichtungen für Betondachsteine.

Betondachsteine sind dachziegelförmige Formkörper aus Beton, die in jüngerer Zeit verstärkt anstelle der bisher üblichen Dachziegel aus Ton zum Decken von Dächern eingesetzt werden.

Betondachsteine, werden in der Regel durch Strangpreß-Verfahren aus plastischen, nicht abgebundenen Betonmassen hergestellt. Zur Farbgebung enthalten diese Betonmassen in der Regel ein anorganisches Buntpigment, beispielsweise Eisenoxid-Rotpigmente oder Eisenoxid-Schwarzpigmente. Der Vorteil von Betondachsteinen gegenüber herkömmlichen Dachziegeln aus Ton ist der weitaus günstigere Herstellungspreis und die höhere Festigkeit gegenüber mechanischen Einwirkungen, wie sie beispielsweise bei Unwettern, z.B. bei Hagelschauern auftreten. Betondachsteine haben allerdings den Nachteil, dass bei Bewitterung das in ihnen enthaltene Calcium teilweise an die Oberfläche tritt und dort zu unschönen Ausblühungen führt. Zudem weisen Betonformkörper herstellungsbedingt eine rauhe Oberfläche auf, die Erosionsvorgänge fördert und insbesondere den Befall mit pflanzlichen Organismen, wie Algen, Flechten und Moosen erleichtert.

Während in jüngerer Zeit das Problem des witterungsbedingten Ausblühens durch Behandlung der Oberfläche mit Beschichtungsmitteln auf Basis wässriger Polymerdispersionen weitgehend gelöst werden konnte, fehlt es an wirtschaftlichen Lösungen zur Herstellung von Betondachsteinen mit glatten Oberflächen.

In der GB-A 2,030,890 wurde vorgeschlagen, Betondachsteine, die nach dem Strangpressverfahren hergestellt werden, mit einer zementgebundenen mineralischen Beschichtung zu versehen, die im Wesentlichen Zement, Wasser und Pigmente enthält. Die Beschichtung wird in der Regel auf den nach einem Strangpreß-Verfahren frisch hergestellten, noch nicht abgebundenen Betondachsteinrohling (sogenannter "grüner" Betondachstein) durch Extrudieren oder Aufwalzen aufgebracht. Die Beschichtungen führen zu einer glatteren Oberfläche des Betondachsteins. Die Beschichtungen haben allerdings den Nachteil, dass sie leicht abplatzen. Zudem sind sie aufgrund des hohen Zement-Anteils unwirtschaftlich. Während sich das Wirtschaftlichkeitskriterium durch Zusatz von Feinstsänden zu dem mineralischen Beschichtungsmittel lösen läßt, verbleibt das Problem des Abplatzens.

Die DE-A 3932573 beschreibt Betondachsteine, die mit einer mineralischen Beschichtung versehen sind, welche neben Zement als Bindemittel, Feinstsand als Zuschlag und anorganischen Pigmenten ein zementverträgliches Polymer enthält. Die so beschichteten Betondachsteine sind weitgehend porenfrei und zeigen eine verbesserte chemische und physikalische Resistenz gegenüber Witterungseinflüssen.

Die üblicherweise zur Modifizierung zementgebundener mineralischer Massen verwendeten wässrigen Polymerdispersionen verzögern jedoch das Abbinden der mineralischen Massen. Hierdurch entstehen Probleme bei der Weiterverarbeitung. So weist die Beschichtung auch nach einem Zeitraum von beispielsweise 24 h nur eine mäßige Festigkeit auf, so daß sie beim Verpacken der Betondachsteine oder bei deren Transport sehr leicht beschädigt wird.

Bei Betondachsteinen führt das verzögerte Abbinden zu Problemen bei dem sich anschließenden Beschichten der Dachsteine mit Dispersionsfarben. Außerdem wird das Problem des Abplatzens der mineralischen Beschichtung bei Frost/Tau-Belastung durch die in der Regel verwendeten polymeren Zusätze nur unzureichend gelöst.

Der vorliegenden Erfindung liegt die Aufgabe zugrunde, eine wässrige Polymerdispersion bereitzustellen, die zu mineralischen Beschichtungen führt, welche nicht abplatzen und gleichzeitig den Abbindeprozess der mineralischen Masse nicht stören.

Überraschenderweise wurde gefunden, dass diese Aufgabe durch wässrige Polymerdispersionen auf Basis von Styrol/Acrylat-, Styrol/Butadien- oder Reinacrylat-Polymeren gelöst wird, wenn diese nicht mehr als 2 Gew.-% Säuregruppen tragende Monomere einpolymerisiert enthalten und zur Stabilisierung der Polymerteilchen in der Dispersion ein Emulgatorsystem enthalten, das eine Mischung aus einem Salz a, ausgewählt unter den Schwefelsäurehalbestern ethoxylierter Alkohole mit wenigstens einer C₄-C₂₀-Alkylgruppe und Neutralverbindungen b, ausgewählt unter ethoxylierten Alkoholen mit einer C₄-C₂₀-Alkylgruppe umfasst.

Demnach betrifft die vorliegende Erfindung die Verwendung von wässrigen Polymerdispersionen, enthaltend:
A wenigstens ein Polymer P in Form dispergierter Polymerteilchen mit einer Glasübergangstemperatur im Bereich von -20 bis +80°C, das aufgebaut ist aus ethylenisch ungesättigten Monomeren M, umfassend:
   i) 90 bis 99,9 Gew.-%, wenigstens eines hydrophoben, monoethylenisch ungesättigten Monomers M1, ausgewählt unter Styrol, Butadien, den C₁-C₄-Alkylestern der Methacrylsäure und den C₂-C₁₂-Alkylestern der Acrylsäure und
   ii) 0,1 bis 10 Gew.-%, wenigstens eines hydrophilen, monoethylenisch ungesättigten Monomeren M2, umfassend bis zu 2 Gew.-% eines oder mehrerer monoethylenisch ungesättigter Monomere mit wenigstens einer Säuregruppe (Monomere M2a) und/oder bis zu 10 Gew.-% davon verschiedene hydrophile Monomere M2b;
   und
B wenigstens ein Emulgatorsystem zur Stabilisierung der Polymerteilchen, enthaltend:
   a) wenigstens ein Salz eines Schwefelsäurehalbesters eines alkoxylierten Alkohols der wenigstens eine C₄-C₂₀-Alkylkette aufweist (Salz a) und
   b) wenigstens einen alkoxylierten Alkohol, der wenigstens eine C₄-C₂₀-Alkylkette aufweist (Neutralverbindung b),
zur Modifizierung zementgebundener mineralischer Beschichtungen für Betondachsteine. Die vorliegende Erfindung betrifft auch ein Verfahren zur Herstellung von Betondachsteinen mit einer mineralischen Beschichtung sowie die nach diesem Verfahren erhältlichen Betondachsteine.

Alle Angaben in Gew.-% sind auf 100 Gew.-%, d.h. auf die Gesamtmonomerenmenge bezogen.

Unter dem Oberbegriff Betondachsteine sind selbstverständlich nicht nur die herkömmlichen Dachpfannen sondern auch Ortgangsteine, Firststeine, Stufensteine, Entlüftungssteine und andere beim Decken von Dächern verwendete Dachelemente aus Beton zu verstehen.

Erfindungsgemäß enthält das zur Stabilisierung der Polymerteilchen des Polymeren P verwendete Emulgatorsystem wenigstens einen anionischen Emulgator (Salz a), der eine sulfatierte Oligoalkylenoxideinheit als hydrophiles Strukturelement und eine C₄-C₂₀-Alkylkette als hydrophobes Strukturelement aufweist. Beispiele für Salze a sind die Salze von Schwefelsäurehalbestern alkoxylierter Alkylphenole mit einer C₄-C₂₀- und vorzugsweise C₆-C₁₆- und insbesondere mit einer C₈-C₁₂-Alkylkette sowie die Salze von Schwefelsäurehalbestern alkoxylierter Alkanole, die sich vorzugsweise von linearen oder verzweigten C₈-C₁₆-Alkanolen ableiten. Die zuletzt genannte Emulgatorklasse ist erfindungsgemäß bevorzugt. Die Alkoholkomponente in dieser zuletzt genannten Emulgatorklasse leitet sich in der Regel von wenig verzweigten Fettalkoholen, die z.B. durch Reduktion natürlich vorkommender Fettsäuren erhältlich sind, oder von durch Oxo-Synthese erhältlichen, in der Regel verzweigteren Oxo-Alkoholen oder von primären, linearen Ziegler-Alkoholen ab. Selbstverständlich können auch Mischungen der Salze a mit unterschiedlichen Alkoholkomponenten eingesetzt werden. Besonders bevorzugte Alkoholkomponente in derartigen Emulgatoren ist Laurylalkohol.

Unter den Salzen a sind insbesondere die Alkalimetall- und die Calciumsalze und besonders die Natriumsalze bevorzugt.

Die Alkylenoxid-Einheiten in den Salzen a leiten sich in der Regel von C₂-C₄-Alkylenoxiden wie Propylenoxid, Butylenoxid und vorzugsweise Ethylenoxid ab. Der mittlere Alkoxylierungsgrad in den Salzen a beträgt im Allgemeinen 1 bis 50, vorzugsweise 2 bis 40. Häufig ist der mittlere Alkoxylierungsgrad ≥ 10, ≥ 15 oder ≥ 20, insbesondere bei Emulgatoren, die von Alkylphenolen abgeleitet sind. In anderen Ausführungsformen liegt der Alkoxylierungsgrad unter 20, z.B. im Bereich von 2 bis 8, insbesondere bei anionischen Emulgatoren, die von Alkanolen abgeleitet sind. Demnach betrifft eine bevorzugte Ausführungsform der vorliegenden Erfindung die Verwendung solcher Polymerdispersionen, worin das Salz a ausgewählt ist unter den Natriumsalzen der Schwefelsäurehalbester von ethoxylierten C₈-C₁₆-Alkanolen mit einem mittleren Ethoxylierungsgrad von 1 bis 20, und insbesondere im Bereich von 2 bis 8.

Ganz besonders bevorzugtes Salz a ist das Natriumsalz des Schwefelsäurehalbesters von ethoxyliertem Laurylalkohol, insbesondere mit einem mittleren Ethoxylierungsgrad von 2 bis 8 und ganz besonders bevorzugt von 3. Andere bevorzugte Salze sind das Natriumsalz des Schwefelsäurehalbesters von ethoxyliertem Octylphenol, Isooctylphenol oder von Nonylphenol mit einem Ethoxylierungsgrad ≥ 10, vorzugsweise im Bereich von 20 bis 50.

Beispiele für erfindungsgemäß geeignete Neutralverbindungen b sind alkoxylierte, vorzugsweise ethoxylierte Alkylphenole mit C₄-C₂₀-Alkylkette und alkoxylierte, vorzugsweise ethoxylierte C₈-C₂₀-, insbesondere C₈-C₁₆-Alkanole. Bevorzugt wird letztere Emulgatorklasse als neutrale Verbindung b. Die Alkoholkomponente in der letzgenannten Emulgatorklasse leitet sich vorzugsweise ab von den oben genannten, natürlichen oder synthetischen Alkoholen, insbesondere von synthetischen, verzweigten Alkoholen oder Gemischen davon, worunter Isotridecanol besonders bevorzugt ist. Der mittlere Alkoxylierungsgrad liegt in der Regel bei 5 bis 100 und vorzugsweise im Bereich von 5 bis 60.

In bevorzugten Ausführungsformen der vorliegenden Erfindung wird ein ethoxyliertes C₈-C₁₆-Alkanol, das sich vorzugsweise von einem verzweigten Alkanol, insbesondere von Isotridecanol ableitet, eingesetzt, das einen mittleren Ethoxylierungsgrad im Bereich von 5 bis 40, insbesondere im Bereich von 5 bis 10 und ganz besonders bevorzugt von etwa 8 aufweist. In anderen bevorzugten Ausführungsformen wird ein ethoxyliertes Alkylphenol eingesetzt, beispielsweise n-Octylphenol, Isooctylphenol oder Nonylphenol, das einen mittleren Ethoxylierungsgrad > 10, insbesondere im Bereich von 20 bis 60 aufweist.

Das erfindungsgemäß zur Anwendung kommende Emulgatorsystem kann in untergeordneter Menge auch noch andere Emulgatoren enthalten. Hierbei kommen insbesondere Emulgatoren mit Oligoalkylenoxid-Struktureinheiten, z.B. Polyethylenoxide und Polypropylenoxide sowie Polyethylen/Polypropylenoxide in Betracht. Als zusätzliche anionische Emulgatoren kommen Alkali- und Calciumsalze von Alkylsulfaten (Alkylrest: C₈-C₂₂) von Alkylsulfonsäuren (Alkylrest: C₁₂-C₁₈) und von Alkylarylsulfonsäuren (Alkylrest: C₉-C₁₈) in Betracht. In der Regel liegt der Anteil an zusätzlichen Emulgatoren unterhalb 50 Gew.-%, insbesondere unterhalb 20 Gew.-%. Ganz besonders bevorzugt enthält das erfindungsgemäß eingesetzte Emulgatorsystem keine weiteren Emulgatoren.

Die erfindungsgemäß verwendeten Polymerdispersionen enthalten in der Regel, bezogen auf das darin enthaltene Polymer 0,1 bis 5 Gew.-%, insbesondere 0,5 bis 4 Gew.-%, besonders bevorzugt 0,5 bis 2,5 Gew.-% wenigstens eines anionischen Emulgators und 0,5 bis 5 Gew.-%, insbesondere 1 bis 4 Gew.-%, besonders bevorzugt 0,5 bis 2,5 Gew.-%, wenigstens einer Neutralverbindung b. In den eingesetzten Emulgatorsystemen liegt das Gewichtsverhältnis von Salz a zu Neutralverbindung b in der Regel im Bereich von 1:2 bis 5:1 und insbesondere im Bereich von 1:1,5 bis 3:1. Vorzugsweise wird die Gesamtmenge an Emulgatoren 10 Gew.-%, insbesondere 8 Gew.-% und besonders bevorzugt 5 Gew.-% nicht überschreiten und vorzugsweise wenigstens 1 Gew.-% betragen.

Neben den vorgenannten Emulgatoren können die zur Anwendung kommenden wässrigen Polymerdispersionen zur Stabilisierung der Polymerisatteilchen auch ein Salz eines Formaldehydkondensationsproduktes einer aromatischen Sulfonsäure, beispielsweise der Naphthalinsulfonsäure oder der Phenolsulfonsäure enthalten. Das Kondensationsprodukt weist in der Regel ein zahlenmittleres Molekulargewicht Mₙ < 1500 und ein gewichtsmittleres Molekulargewicht im Bereich von 5000 bis 10.000, insbesondere im Bereich von 700 bis 2500 auf. Bevorzugt sind hiervon die Alkalimetall- und die Erdalkalimetallsalze, insbesondere die Natrium- und die Calciumsalze. Geeignete Salze von Formaldehyd-Kondensationsprodukten aromatischer Sulfonsäuren sind beispielsweise in der DE-A 24 45 813, der EP-A 78449, der EP-A 407 889, der WO 98/03576 und der WO 98/03577 beschrieben, auf die hiermit insoweit Bezug genommen wird. Derartige Verbindungen sind im Handel als Tamol® Marken der BASF AG (z.B. Tamol® NN 4501 und Tamol® NN 9104) erhältlich. Die eingesetzte Menge derartiger Verbindungen beträgt im Allgemeinen etwa 0,1 bis 2,0 Gew.-%, bezogen auf das in der wässrigen Dispersion enthaltene Polymer.

Erfindungsgemäß bevorzugt enthalten die verwendeten, wässrigen Polymerdispersionen keine wasserlöslichen Polymere mit einem zahlenmittleren Molekulargewicht Mₙ > 1500. Derartige Polymere werden üblicherweise als Schutzkolloide zur Stabilisierung der Polymerisatteilchen in wässrigen Polymerdispersionen eingesetzt. Insbesondere hat es sich bewährt, wenn die erfindungsgemäßen Polymerdispersionen keine wasserlöslichen Polymere mit Carboxylgruppen, z.B. wasserlösliche Homo- oder Copolymere der Acrylsäure oder der Methacrylsäure enthalten.

Das in den erfindungsgemäß zur Anwendung kommenden wässrigen Polymerdispersionen enthaltene Polymer ist in der Regel ausgewählt unter den folgenden Polymerklassen:
i) Styrol/Butadien-Copolymeren,
ii) Styrol/C₂-C₁₂-Alkylacrylat-Copolymeren und
iii)C₁-C₄-Alkylmethacrylat/C₂-C₁₂-Alkylacrylat-Copolymeren (sogenannte Reinacrylate).

Die Polymere P der vorgenannten Polymerklassen enthalten zusätzlich zu den vorgenannten Monomeren M1 noch 0,1 bis 10 Gew.-%, bezogen auf das Gesamtgewicht des Polymeren P, wenigstens eines hydrophilen Monomeren M2 einpolymerisiert, das in der Regel eine Wasserlöslichkeit > 60 g/l bei 25°C aufweist.

Beispiele für derartige Monomere M2 sind zum einen die Monomere M2a, die ausgewählt sind unter monoethylenisch ungesättigten Monocarbonsäuren mit vorzugsweise 3 bis 6 Kohlenstoffatomen, z.B. Acrylsäure und Methacrylsäure, monoethylenisch ungesättigten Dicarbonsäuren mit vorzugsweise 4 bis 8 C-Atomen, beispielsweise Itakonsäure und Methylenmaleinsäure, sowie ethylenisch ungesättigte Sulfonsäuren wie Vinyl-, Allyl- und Methallylsulfonsäure sowie Acryloxyethansulfonsäure, Methacryloxyethansulfonsäure, 2-Acrylamido-2-methylpropansulfonsäure und 2-Methacrylamido-2-methylpropansulfonsäure, die in den Polymeren auch in der Salzform, z.B. als Alkalimetallsalze vorliegen können. Bevorzugte Monomere M2a sind Acrylsäure, Methacrylsäure und Itakonsäure. Die Polymere der erfindungsgemäßen, wässrigen Polymerdispersionen enthalten häufig 0,1 bis 2 Gew.-% und insbesondere 0,1 bis 1 Gew.-%, bezogen auf das Gesamtgewicht des Polymeren, Monomere M2a einpolymerisiert. Als besonders günstig hat es sich erwiesen, wenn das Polymer nicht mehr als 1 Gew.-%, insbesondere nicht mehr als 0,75 Gew.-% und besonders bevorzugt nicht mehr als 0,5 Gew.-% Monomere M2a einpolymerisiert enthält.

Neben oder anstelle der Monomere M2a können die Polymere auch noch Monomere M2b einpolymerisiert enthalten, die ausgewählt sind unter den Amiden und den N-Methylolamiden monoethylenisch ungesättigter Monocarbonsäuren mit vorzugsweise 3 bis 6 C-Atomen, z.B. Acrylamid, Methacrylamid, N-Methylolacrylamid und -Methacrylamid, sowie unter monoethylenisch ungesättigten Nitrilen mit 3 bis 6 C-Atomen, wie Acrylnitril und Methacrylnitril. Ihr Anteil kann bis zu 10 Gew.-% betragen und liegt vorzugsweise im Bereich von 0,1 bis 5 Gew.-%.

Im Hinblick auf die oben genannten Polymerklassen i bis iii werden erfindungsgemäß solche Polymerdispersionen bevorzugt, worin die Monomere M1 Styrol und Butadien umfassen. Dabei liegt vorzugsweise das Gewichtsverhältnis von Styrol zu Butadien im Bereich von 3:1 bis 3:2. Als Hilfsmonomere M2 enthält diese Polymerklasse bevorzugt 0,1 bis 5 Gew.-% Monomere M2b. Die Polymere dieser Polymerklasse können neben den Monomeren M2b auch Monomere M2a, vorzugsweise jedoch nicht mehr als 1 Gew.-%, bezogen auf die Gesamtmonomerenmenge einpolymerisiert enthalten.

Im Hinblick auf die Polymerklasse ii und die Polymerklasse iii sind solche Polymere bevorzugt, die wenigstens ein Monomer M1a, ausgewählt unter Styrol und Methylmethacrylat und wenigstens ein Monomer M1b, ausgewählt unter den C₂-C₁₀-Alkylestern der Acrylsäure, insbesondere ausgewählt unter Ethylacrylat, n-Butylacrylat und 2-Ethylhexylacrylat, einpolymerisiert enthalten. Dabei liegt das Gewichtsverhältnis von Mla:Mlb vorzugsweise im Bereich von 2:1 bis 1:2 und insbesondere im Bereich von 1,5:1 bis 1:1. Die Polymerklassen ii und iii enthalten als Hilfsmonomere M2 vorzugsweise Monomere M2a in einer Menge von 0,05 bis 2 Gew.-%, insbesondere 0,1 bis 1 Gew.-%, bezogen auf das Polymer P. Als Monomere M2a werden dabei 0,1 bis 1 Gew.-%, insbesondere 0,1 bis 0,5 Gew.-%, Acrylsäure oder Methacrylsäure bevorzugt. Zusätzlich enthalten derartige Polymere häufig 0,1 bis 5 Gew.-%, insbesondere 0,5 bis 3 Gew.-% Monomere M2b, und hierunter bevorzugt die Amide monoethylenisch ungesättigter C₃-C₆-Monocarbonsäuren.

Unter der Glasübergangstemperatur TG wird erfindungsgemäß die gemäß ASTM D3418-82 durch Differentialthermoanalyse (DSC) ermittelte "midpoint-temperature" verstanden (siehe auch Zosel, Farbe und Lack 82 (1976), S. 125-134 sowie DIN 53765). Die Glasübergangstemperatur der Polymere liegt vorzugsweise im Bereich von -10 bis +50°C, insbesondere im Bereich von 0 bis 40°C.

Die Herstellung der erfindungsgemäß zur Anwendung kommenden, wässrigen Polymerdispersionen ist dem Fachmann bekannt und erfolgt in der Regel durch radikalische, wässrige Emulsionspolymerisation der Monomere M in Gegenwart des vorgenannten Emulgatorsystems und in Gegenwart eines die radikalische Polymerisation auslösenden, vorzugsweise wasserlöslichen Initiators.

Als Initiatoren kommen Azoverbindungen, organische oder anorganische Peroxide, Salze der Peroxodischwefelsäure und Redox-Initiatorsysteme in Betracht. Vorzugsweise setzt man ein Salz der Peroxodischwefelsäure, insbesondere ein Natrium-, Kalium- oder Ammoniumsalz oder ein Redoxinitiatorsystem ein, das als Oxidationsmittel Wasserstoffperoxid oder ein organisches Peroxid wie tert.-Butylhydroperoxid und als Reduktionsmittel eine Schwefelverbindung enthält, die insbesondere ausgewählt ist unter Natriumhydrogensulfit, Natriumhydroxymethansulfinat und dem Bisaddukt von Hydrogensulfit an Aceton.

Selbstverständlich kann das Molekulargewicht der Polymere durch Zugabe von Reglern in einer geringen Menge, in der Regel bis zu 2 Gew.-%, bezogen auf die polymerisierenden Monomere M, eingestellt werden. Als Regler kommen insbesondere organische Thioverbindungen, ferner Allylalkohole und Aldehyde in Betracht. Bei der Herstellung der Butadien-enthaltenden Polymere der Klasse i werden häufig Regler in einer Menge von 0,1 bis 2 Gew.-%, vorzugsweise organische Thioverbindungen wie tert.-Dodecylmercaptan eingesetzt.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden. Die Monomeren können sowohl als Monomermischung als auch als wässrige Monomeremulsion der Polymerisation zugeführt werden.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie Encyclopedia of Polymer Science and Technology, Vol. 5, John Wiley & Sons Inc., New York 1966, S. 847).

Polymerisationsdruck und Polymerisationstemperatur sind von untergeordneter Bedeutung. Im Allgemeinen arbeitet man bei Temperaturen zwischen Raumtemperatur und 120°C, vorzugsweise bei Temperaturen von 40 bis 110°C und besonders bevorzugt zwischen 50 und 100°C. Bei Polymerisation butadienhaltiger Monomermischungen wird in der Regel unter Druck polymerisiert.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Nach Beendigung der Polymerisation werden die verwendeten Polymerdispersionen vor ihrer erfindungsgemäßen Verwendung häufig alkalisch, vorzugsweise auf pH-Werte im Bereich von 7 bis 10 eingestellt. Dabei hat es sich als vorteilhaft erwiesen, wenn man zur Neutralisation keinen Ammoniak oder flüchtige organische Amine einsetzt, um so eine Dispersion zu erhalten, die frei ist von Ammoniak. Vorzugsweise erfolgt die Neutralisation mit einem Hydroxid, wie Natriumhydroxid oder calciumhydroxid.

Erfindungsgemäß werden die vorstehend beschriebenen wässrigen Polymerdispersionen zur Modifizierung zementgebundener, mineralischer Beschichtungen eingesetzt. Die mineralischen Beschichtungen werden durch Aufbringen einer plastischen, zementhaltigen, mineralischen Beschichtungsmasse, die neben den hierfür üblichen Bestandteilen wenigstens eine erfindungsgemäße, wässrige Polymerdispersion enthält, auf das zu beschichtende Substrat hergestellt.

Übliche zementgebundene, mineralische Beschichtungsmassen enthalten, wie bereits einleitend dargestellt, wenigstens ein zementhaltiges, hydraulisches Bindemittel, mineralische Zuschlagstoffe, gegebenenfalls farbgebende Pigmente, übliche Hilfsmittel sowie Wasser in einer Menge, die zusammen mit dem Wasser aus der wässrigen Polymerdispersion ein optimales Abbinden der mineralischen Masse und eine verarbeitungstechnisch günstige Rheologie, d.h. eine plastische Verformbarkeit gewährleistet, die an den jeweiligen Beschichtungsprozess angepaßt ist.

Typische hydraulische Bindemittel bestehen aus mindestens 70 Gew.-% Zement, wie Hochofenzement, Höhen-Schieferzement, Portlandzement, hydrophobierter Portlandzement, Schnellzement, Quellzement oder Tonerdezement, wobei Portlandzement besonders bevorzugt wird.

Typische mineralische Zuschlagstoffe sind Sand, insbesondere Feinstsand, vorzugsweise mit einer Sieblinie von bis zu 2 mm, sowie anorganische Füllstoffe wie Calciumcarbonat und Calciumsilikate. Als Hilfsmittel kommen insbesondere Entschäumer und Verdikker in Betracht.

Das Verhältnis von Wasser zu Zement in den erfindungsgemäß modifizierten, mineralischen Beschichtungsmassen liegt in der Regel im Bereich von 0,3 bis 0,7, insbesondere im Bereich von 0,35 bis 0,6.

Erfindungsgemäß werden solche plastischen, mineralischen Massen bevorzugt, worin das Gewichtsverhältnis von Kunststoff (d.h. Po-lymer der wässrigen Polymerdispersion) zu Zement im Bereich von 1:100 bis 7:3, insbesondere im Bereich von 1:30 bis 1:5 und ganz besonders bevorzugt bei etwa 1:20 liegt.

Als Zuschläge für mineralische Beschichtungsmassen, die zur Beschichtung von Betondachsteinen besonders geeignet sind, kommen insbesondere Feinstsände mit einer Sieblinie bis 2 mm, vorzugsweise bis 1 mm und insbesondere bis 0,8 mm sowie anorganische Buntpigmente, insbesondere Eisenoxid-Rotpigment und EisenoxidSchwarzpigment in Betracht.

Typische Hilfsmittel bei derartigen Massen sind Entschäumer, Lösungsmittel und/oder Weichmacher, Wasserretentionsmittel, Pigmentverteiler bzw. Netzmittel, Verdicker und Biozide.

Ganz besonders bevorzugt enthalten die zur Beschichtung von Betonformkörpern, insbesondere von Betondachsteinen, geeigneten mineralischen Massen, bezogen auf ihre trockenen Bestandteile:
30 bis 60 Gew.-%, insbesondere 45 bis 50 Gew.-% Zement, insbesondere Portlandzement,
35 bis 60 Gew.-%, insbesondere 45 bis 50 Gew.-% Feinstsand,
2 bis 10 Gew.-%, insbesondere 3 bis 6 Gew.-% Pigmente,
0 bis 3 Gew.-% Hilfsmittel.

Zur Verarbeitung setzt man den erfindungsgemäßen Massen Wasser vorzugsweise in einer Menge von 15 bis 30 Gew.-%, bezogen auf das Gesamtgewicht der Masse zu.

Die erfindungsgemäß modifizierten mineralischen Beschichtungsmassen eignen sich insbesondere zur Herstellung von mineralischen Beschichtungen auf Betondachsteinen. Demnach betrifft die vorliegende Erfindung auch ein Verfahren zur Herstellung eines Betondachsteins mit einer mineralischen Beschichtung, das zumindest die folgenden Schritte umfasst:
1. Herstellen eines unbeschichteten Betondachsteinrohlings,
2. Aufbringen einer plastischen, zementhaltigen, mineralischen Masse auf den noch feuchten Betondachsteinrohling, wobei es sich bei der mineralischen, plastischen Masse um die vorstehend definierten, zementgebundenen mineralischen Massen handelt, die mit einer erfindungsgemäßen, wässrigen Polymerdispersion modifiziert sind, und
3. Trocknen des Betondachsteins.

Die Herstellung der Betondachsteinrohlinge erfolgt in üblicher Weise aus fertig gemischtem Beton, beispielsweise durch ein Strangpreßverfahren. Ein derartiges Verfahren ist beispielsweise in der DE-OS 3712700 beschrieben. Bei diesem Verfahren wird mit einer Frischbeton-Aufgabevorrichtung auf zugeführte Unterformen ein kontinuierlicher Frischbetonstrang aufgebracht, von einer Formgebungswalze und einem Glätter verdichtet und anschließend am Fuß- und Kopfrand in einer Schneidestation von einem Schneidwerkzeug zu Dachsteinrohlingen gleicher Länge geschnitten.

Der eingesetzte Frischbeton enthält neben Zement, vorzugsweise Portlandzement, übliche Zuschläge, wie Sand, Flugasche und Farbpigmente sowie gegebenenfalls übliche Verarbeitungshilfsmittel wie vorgenannt, gegebenenfalls modifizierende Polymere, z.B. die erfindungsgemäßen, wässrigen Polymerdispersionen und Wasser zur Erreichung einer ausreichenden Plastizität des Frischbetons für die Verarbeitung.

Sofern gewünscht setzt man den Betonmischungen, die zur Herstellung von Betondachsteinrohlingen eingesetzt werden, eine wässrige Polymerdispersion, vorzugsweise eine erfindungsgemäße wässrige Polymerdispersion, in einer Menge zu, dass das Kunststoff/Zement-Gewichtsverhältnis der Betonmischung im Bereich von 1:50 bis 1:2, insbesondere im Bereich von 1:20 bis 1:5 und speziell bei etwa 1:10 liegt.

Die Verwendung der erfindungsgemäßen, wässrigen Polymerdispersionen in den zur Herstellung der Betondachsteinrohlinge verwendeten Betonmischungen führt zu Betondachsteinen mit erhöhter Druck- und Biegezugfestigkeit, ohne daß eine nachteilige Beeinflussung des Abbindeverhaltens auftritt. Insbesondere wird rasch eine hohe Anfangsfestigkeit erreicht, die mit der eines unmodifizierten Betondachsteinrohlings vergleichbar ist.

Auf den so hergestellten Frischbetonstrang oder auf die nach dem Zerschneiden erhältlichen frischen Betondachsteinrohlinge wird dann die erfindungsgemäß polymermodifizierte, zementgebundene mineralische Beschichtungsmasse aufgebracht. Das Aufbringen erfolgt nach bekannten Verfahren, beispielsweise durch Aufwalzen oder vorzugsweise durch Aufextrudieren der plastischen mineralischen Masse. Hiernach wird der so beschichtete Frischbetonstrang oder der so beschichtete Betondachsteinrohling einem zweiten Schneideschritt unterworfen und anschließend einem Abbindeprozess zugeführt. Das Abbinden kann sowohl bei Raumtemperatur als auch durch einen Warmhärtungsprozess bei Temperaturen im Bereich von 20 bis 60°C vorzugsweise unter Luftfeuchtigkeit erfolgen. Die erfindungsgemäß polymermodizierte, zementgebundene mineralische Beschichtungsmasse kann auch auf einen bereits abgebundenen Betondachsteinrohling in der oben beschriebenen Weise aufgebracht werden. Bevorzugt wird diese Beschichtungsmasse jedoch auf einen noch nicht abgebundenen Betondachsteinrohling oder auf einen Frischbetonstrang aufgebracht. Selbstverständlich kann man auch mehrere mineralische Beschichtungen auf den Betondachsteinrohling aufbringen.

Auf diese Weise erhält man einen mit wenigstens einer erfindungsgemäßen, zementgebundenen mineralischen Beschichtung versehenen Betondachstein.

Die erfindungsgemäße, zementgebundene mineralische Beschichtungsmasse bringt man in der Regel in einer Menge auf, dass die daraus resultierende mineralische Beschichtung eine Dicke aufweist, die im Bereich von 0,5 bis 15 mm liegt. In einer bevorzugten Ausführungsform der Erfindung wird die Auftragsmenge so gewählt, dass eine Schichtdicke von 1 bis 5 mm resultiert. In einer weiteren Ausführungsform der vorliegenden Erfindung wird auf diese erste Beschichtung noch eine weitere zementgebundene, mineralische Beschichtung aufgebracht, wobei es sich hierbei um eine erfindungsgemäße, polymermodizierte Beschichtung handeln kann als auch um eine nicht polymermodifizierte Beschichtung. Vorzugsweise handelt es sich bei dieser zweiten Beschichtung ebenfalls um eine mit den erfindungsgemäßen Polymerdispersionen modifizierte Beschichtung. Die Auftragsmenge an zementhaltigem Beschichtungsmittel wird in der Regel so gewählt, dass die zweite Beschichtung eine Dicke im Bereich von 1 bis 15 mm und insbesondere im Bereich von 5 bis 15 mm aufweist.

Die erfindungsgemäß verwendeten Polymerdispersionen führen im Unterschied zu anderen Polymerdispersionen des Standes der Technik nicht zu einer Verzögerung des Abbindeprozesses. Daher weisen die Beschichtungen bereits nach kurzer Zeit eine hohe Festigkeit auf. Ausserdem haften Farbanstriche, die auf die noch feuchte mineralische Beschichtung aufgebracht werden, besser. Zudem führen die erfindungsgemäß verwendeten Polymerdispersionen nicht zu einem Ansteifen der mineralischen Beschichtung und ermöglichen z.T. aufgrund ihrer verflüssigenden Wirkung ein Absenken der Wasser-Zement-Zahl auf Werte < 0,5, insbesondere < 0,45 und besonders bevorzugt < 0,4, was zu einer erhöhten Endfestigkeit der mineralischen Beschichtung führt.

Die mit einer erfindungsgemäßen, zementgebundenen mineralischen Beschichtung versehenen Betondachsteine weisen eine besonders glatte Oberfläche auf, die wenig Angriffspunkte für erosive Prozesse und pflanzliche Organismen aufweist. Ein Abplatzen der erfindungsgemäßen mineralischen Beschichtung wird auch bei mechanischer Belastung und bei Einwirkung von Frost nicht beobachtet.

Es hat sich als vorteilhaft erwiesen, wenn man auf die erfindungsgemäße, mineralische Beschichtung zusätzlich ein polymeres Beschichtungsmittel, vorzugsweise auf Basis einer wässrigen Polymerdispersion, aufbringt. Diese polymere Beschichtung kann sowohl vor als auch nach dem Abbinden auf die erfindungsgemäße, zementgebundene mineralische Beschichtung aufgebracht werden. Vorzugsweise bringt man die polymergebundenen Beschichtungsmittel vor dem Abbinden der erfindungsgemäßen, zementgebundenen mineralischen Beschichtung auf und überführt dann den so beschichteten Betondachstein dem Abbindevorgang. Der Auftrag kann in an sich bekannter Weise durch Spritzen, Spachteln, Rakeln, Rollen oder Gießen erfolgen.

Als Beschichtungsmittel sind alle polymergebundene Beschichtungsmittel des Standes der Technik geeignet, die zur Beschichtung von konventionell gefertigten Betondachsteinen eingesetzt werden. Hierbei handelt es sich insbesondere um Beschichtungsmittel auf Basis wässriger Polymerdispersionen der oben genannten Polymerklassen ii und iii.

Die Polymere in den Beschichtungsmitteln weisen vorzugsweise eine Glasübergangstemperatur im Bereich von -20 bis +80°C und insbesondere im Bereich von 0 bis +50°C auf. Ihr molekularer Aufbau ist in der Regel mit dem der erfindungsgemäßen Polymere vergleichbar, jedoch können auch andere Emulgatorsysteme, beispielsweise die in der EP-A 469 295 genannten Mono- und Dialkylbisphenylethersulfonate zur Anwendung kommen. Auch können in den für polymere Beschichtungsmittel geeigneten Polymerdispersionen weitere Hilfsmonomere eingesetzt werden, z.B. ethylenisch ungesättigte Silanverbindungen.

Geeignete Beschichtungsmittel, wie sie zur Beschichtung konventionell gefertigter Betondachsteine beschrieben werden, können der EP-A 469 295, EP-A 492 210, EP 355 028, EP 383 002, EP-A 941 977, DE-A 197 49 642, DE-A 198 10 050, DE-A 40 03 909, DE-A 43 41 260 entnommen werden. Die in den vorgenannten Patentanmeldungen beschriebenen Beschichtungsmittel als auch die dort beschriebenen Beschichtungsverfahren für konventionell hergestellte Betondachbausteine können sämtlich auf die mit einer mineralischen Beschichtung versehenen Betondachsteine übertragen werden. Insoweit wird auf die Offenbarung dieser Schriften in vollem Umfang Bezug genommen.

Die polymergebundenen Beschichtungsmittel können sowohl in pigmenthaltiger Form, d.h. in Form einer Farbe, als auch in Form einer pigmentfreien Zubereitung, d.h. in Form eines Klarlacks, auf den mit einer erfindungsgemäßen mineralischen Beschichtung versehenen Betondachstein aufgebracht werden.

Die polymergebundenen Beschichtungsmittel können in einer oder in mehreren Schichten auf den mit der mineralischen Beschichtung versehenen Betondachstein aufgebracht werden.

In einer ganz besonders bevorzugten Ausgestaltung des erfindungsgemäßen Verfahrens bringt man auf den mit einer erfindungsgemäßen mineralischen Beschichtung versehenen Betondachstein in einem ersten Schritt ein pigmentfreies Beschichtungsmittel auf Basis einer wässrigen Polymerdispersion, vorzugsweise einer Reinacrylat-Dispersion oder einer Styrol/Acrylat-Dispersion, vorzugsweise im nicht abgebundenen Zustand, auf. Auf den so mit einer mineralischen und einer polymergebundenen Beschichtung versehenen Betondachstein bringt man in einem zweiten Schritt ein weiteres, polymergebundenes Beschichtungsmittel, vorzugsweise auf Basis einer Styrol/Acrylat-Dispersion oder einer Reinacrylat-Dispersion auf. Das zweite Beschichtungsmittel ist in der Regel als Farbe formuliert, d.h. es enthält Farbpigmente und gegebenenfalls Füllstoffe. In derartigen Farben liegt der Gehalt an Pigment plus Füllstoff in der Regel im Bereich von 5 bis 100 Gew.-%, bezogen auf das in der Farbe enthaltene Polymer. Auf diese Farbbeschichtung kann man weitere pigmentfreie oder pigmenthaltige Beschichtungsmittel auf Basis wässriger Polymerdispersionen oder anderer Polymere aufbringen. Sofern die zweite Polymerbeschichtung mehrere verschiedene Polymerschichten umfasst, enthält die zunächst aufgetragene zweite Beschichtung in der Regel mehr Pigment als die danach aufgetragenen weiteren Schichten.

Die Auftragsmengen der einzelnen polymeren Beschichtungsmittel werden in der Regel so gewählt, dass die erste Beschichtung ein Flächengewicht von 50 bis 500 g/m² und die zweite und weitere Beschichtungen ein Gesamtflächengewicht von 50 bis 500 g/m² aufweisen (trocken gerechnet). Die erste Beschichtung dient dabei als Primer beziehungsweise als Haftvermittler für die zweite und die weiteren Beschichtungen.

Die erfindungsgemäßen mit einer mineralischen Beschichtung versehenen Betondachsteine weisen eine besonders glatte Oberfläche auf und sind daher weniger empfindlich gegenüber erosiven Witterungseinwirkungen als auch gegenüber Befall mit Mikroorganismen wie Pilzen und Algen, sowie gegenüber Befall mit Flechten und Moosen. Durch die zusätzliche polymere Beschichtung wird die Witterungsstabilität der Betondachsteine, insbesondere der Schutz vor Ausblühen von Calcium, verbessert. Überraschenderweise führt die polymere Beschichtung bei Betondachsteinen mit einer erfindungsgemäßen, polymermodifizierten mineralischen Beschichtung zu einem besseren Ausblühschutz als bei konventionellen Betondachsteinen ohne mineralische Beschichtung als auch bei Betondachsteinen mit einer nicht polymer gebundenen mineralischen Beschichtung. Zudem zeigen die polymeren Beschichtungen auf den polymermodifizierten mineralischen Beschichtungen eine bessere Haftung und eine geringere Neigung zur Blasenbildung. Außerdem sind die polymeren Beschichtungen auf den erfindungsgemäßen polymermodifizierten mineralischen Beschichtungen weniger anfällig gegen Frost-Einfluß.

Die folgenden Beispiele sollen die Erfindung verdeutlichen ohne sie jedoch einzuschränken.

### I. Polymermodifizierte, zementgebundene mineralische Beschichtungsmassen, damit hergestellte, beschichtete Betonsteine und Untersuchung der anwendungstechnischen Eigenschaften.

Zur Modifizierung wurden wässrige Polymerdispersionen D1, D2 und VD1 eingesetzt:
D1 (erfindungsgemäß): Als wässrige Polymerdispersion D1 wurde die in Beispiel 1 der WO 98/35995 beschriebene wässrige Styrol/Butadien-Polymerdispersion eingesetzt. Das Polymer dieser Dispersion ist aufgebaut aus 65 Gew.-Teilen Styrol, 32,5 Gew.-Teilen Butadien und 2,5 Gew.-Teilen N-Methylolacrylamid. Als Stabilisatorsystem enthält die Dispersion 1 Gew.-Teil des Natriumsalzes des Schwefelsäurehalbesters von ethoxyliertem Laurylalkohol (Ethoxylierungsgrad 3), 1,8 Gew.-Teile eines ethoxylierten Isotridecanols mit einem Ethoxylierungsgrad von 8 und 1,25 Gew.-Teile eines Naphthalinsulfonsäure-Formaldehyd-Kondensats (Tamol® NN 4501 der BASF Aktiengesellschaft). Zusätzlich enthielt die Dispersion D1 0,3 Gew.-% Entschäumer auf Basis eines Gemischs aus 40 Teilen propoxyliertem Talgfettalkohol und 60 Teilen Ethylenoxid/Propylenoxid-Blockcopolymer-Stearat. Die Herstellung der Dispersion D1 erfolgte durch radikalische, wässrige Emulsionspolymerisation in Gegenwart von 1,3 Gew.-Teilen tert.-Dodecylmercaptan, 1 Gew.-Teil des Natriumsalzes des Schwefelsäurehalbesters von ethoxyliertem Laurylalkohol und 0,2 Gew.-Teilen des ethoxylierten Tridecanols. Die übrigen Bestandteile des Stabilisatorsystems wurden nach Polymerisation und chemischer Desodorierung zu der wässrigen Polymerdispersion gegeben. Die Polymerdispersion hatte einen Feststoffgehalt von 50,4 Gew.-% und wies einen pH-Wert von 9,6 (nach Neutralisation mit Natronlauge) auf.
D2 (erfindungsgemäß): Als wässrige Polymerdispersion wurde ein Emulsionspolymerisat eingesetzt, dessen Polymer aus 50 Gew.-Teilen n-Butylacrylat, 50 Gew.-Teilen Styrol, 1,5 Gew.-Teilen Acrylamid und 0,15 Gew.-Teilen Acrylsäure aufgebaut war. Als Emulgatorsystem enthält die Dispersion D2 3,5 Gew.-Teile (auf 100 Gew.-Teile Polymer) eines ethoxylierten Nonylphenols (Ethoxylierungsgrad 25) und 3,5 Gew.-Teile des Natriumsalzes des Schwefelsäurehalbesters von ethoxyliertem p-Isooctylphenol (Ethoxylierungsgrad von 25).
VD1 (nicht erfindungsgemäß): Als wässrige Polymerdispersion VD1 diente ein Emulsionspolymerisat, dessen Polymer aus 50 Gew.-Teilen n-Butylacrylat, 50 Gew.-Teilen Styrol, 1,5 Gew.-Teilen Acrylamid und 2,5 Gew.-Teilen Acrylsäure aufgebaut war. Als Stabilisatorsystem (Emulgatorsystem) enthielt die Dispersion 0,5 Gew.-Teile (auf 100 Gew.-Teile Polymer) eines ethoxylierten Isooctylphenols (eEthoxylierungsgrad von 25) und 1,5 Gew.-Teile des Natriumsalzes des Schwefelsäurehalbesters von ethoxyliertem Isooctylphenol (Ethoxylierungsgrad von 25).

Man stellte aus 9,4 Gew.-Teilen Polymerdispersion (50 gew.-%ig), 50 Gew.-Teilen Zement (EM I 42.5), 25 Gew.-Teilen Quarzsand (0,063 bis 0,4 mm), 5 Gew.-Teilen EisenoxidSchwarzpigment und Wasser zur Erreichung einer konstanten Verarbeitungsviskosität eine mineralische Beschichtungsmasse her. Diese wurde auf einen nachstehend beschriebenen Betonstein-Rohling aufgebracht.

Aus einer plastischen Betonmischung, die Sand (Korngröße bis 0,3 mm), Zement und Wasser im Gewichtsverhältnis 4:1:0,4 enthielt wurde durch Strangpressen ein flacher Betonstrang mit einer Dicke von etwa 1,8 cm und einer Breite von 20 cm erzeugt und mittels eines Schneidwerkzeugs in etwa 30 cm lange Betonsteinrohlinge zerteilt. Auf diese Betonsteinrohlinge wurde eine der unter I beschriebenen mineralischen Beschichtungen in einer Stärke von 3 mm aufextrudiert.

Zur Bestimmung des Abbindeverhaltens wurde nach einem Tag die Biegefestigkeit (nach DIN 196 in N/mm²) und die Druckfestigkeit (nach DIN 196 in N/mm²) bestimmt. Die Werte sind in Tabelle 1 angegeben. Zum Vergleich wurde ein unbeschichteter Betonstein (VBsp. 3) und ein beschichteter Betonstein untersucht, dessen Beschichtung kein Polymer (bei ansonsten gleicher Zusammensetzung) enthielt (VBsp. 1).

**Tabelle 1**

| Anwendungsbeispiel | Dispersion | K/Z¹⁾ | W/Z²⁾ | Biegezug³⁾ [N/mm²] | Druckfestigkeit³⁾ [N/mm²] |
|---|---|---|---|---|---|
| VBsp. 1 | - | - | 0,5 | 3,2 | 15,1 |
| Bsp. 1 | D1 | 0,094 | 0,45 | 3,2 | 15,1 |
| Bsp. 2 | D2 | 0,094 | 0,3 | 3,2 | 13,8 |
| VBsp. 2 | VD1 | 0,094 | 0,47 | 3,0 | 11,9 |
| VBsp. 3⁴⁾ | - | - | - | 3,6 | 16,1 |

| | | | | | |
|---|---|---|---|---|---|
| ¹⁾ Kunststoff-Zement-Gewichtsverhältnis ²⁾ Wasser-Zement-Gewichtsverhältnis ³⁾ Druck- bzw. Biegezugfestigkeit nach 1 d bei trockener Lagerung ⁴⁾ unbeschichteter Betonstein | | | | | |

Aus Tabelle 1 geht hervor, dass Dispersion D1 das Abbindeverhalten gar nicht verzögert und Dispersion D2 nur schwach.
Hingegen bewirkt VD1 eine starke Abbindeverzögerung. Gleichzeitig wurde beobachtet, dass die mit VD1 modifizierte Beschichtung sehr rasch ansteifte und sich nur schlecht verarbeiten ließ.

Außerdem wurden die mit D1 modifizierten Proben und die nicht modifizierten Proben nach 28 Tagen bei trockener Lagerung und nach 28 Tagen bei Lagerung in Wasser hinsichtlich ihrer Druckfestigkeit untersucht. Zudem wurde die Haftzugfestigkeit (in N/mm²) an einer Kernbohrung bestimmt (DIN 18555).

**Tabelle 2**

| Betonstein | Dispersion | K/Z | W/Z | Biegezug | | Druckfestigkeit | | Haftzugfestigkeit¹⁾ |
|---|---|---|---|---|---|---|---|---|
| | | | | trocken | nass | trocken | nass | |
| VBsp.1 | - | - | 0,5 | 4,7 | 6,1 | 23,5 | 31 | 0,5(R)²⁾ |
| Bsp.1 | D1 | 0,094 | 0,45 | 6,1 | 5,9 | 28,0 | 31 | 0,5 |

| | | | | | | | | |
|---|---|---|---|---|---|---|---|---|
| ¹⁾ 14 Tage trockene Lagerung und anschließend 25 Wechsel von -15°C / Wasserlagerung (Frost/Tau-Test). ²⁾ (R) Oberfläche gerissen | | | | | | | | |

Aus Tabelle 2 geht hervor, dass die mit D1 modifizierten mineralischen Beschichtungen bei trockener Lagerung eine höhere Festigkeit aufweisen und unter simulierten Frost/Tau-Bedingungen eine bessere Haftung auf dem Betonstein aufweisen als unmodifizierte mineralische Beschichtungen.

### II. Herstellung und Untersuchung von Betonsteinen, die mit einem Farbauftrag versehen wurden.

Auf einen Teil der nach I hergestellten, mit einer mineralischen Beschichtung versehenen Betonsteine brachte man mittels einer Spritzpistole einen Primer auf Basis einer wässrigen Polymerdispersion auf (Auftrag etwa 150 g/m²), trocknete 2 h bei 40°C und 75% relativer Luftfeuchte und anschließend 4 h bei 40°C und 95% relativer Luftfeuchte. Dann brachte man in gleicher Weise eine Farbe auf (Auftrag etwa 300g/m²) und trocknete 8 h bei 40°C und 50% relativer Luftfeuchte.

Als Primer diente eine wässrige Zubereitung auf Basis einer 50 gew.-%igen Polymerdispersion, deren Polymer 54 Gew.-Teile Styrol, 44 Gew.-Teile n-Butylacrylat, 2 Gew.-Teile Acrylsäure und 0,5 Gew.-Teile Methacryloxypropyltrimethoxysilan einpolymerisiert enthält und die mit 0,5 Gew.-Teilen Natriumlaurylsulfat stabilisiert ist. Zur Konfektionierung des Primers gab man zu 1 kg dieser Dispersion 50 g eines Entschäumers (Tegofoamex® 825 der Goldschmidt AG) und 0,5 g eines Weichmachers (technisches Gemisch von Di-n-butylestern von C₄-C₆-Dicarbonsäuren). Anschließend wurde mit 1 kg entionisiertem Wasser verdünnt.

Als Farbe diente eine pigmenthaltige, polymergebundene Zubereitung auf Basis der für den Primer beschriebenen wässrigen Polymerdispersion. Zur Herstellung der Farbe wurden 230,6 g eines handelsüblichen Füllstoffs (Calciumcarbonat/Calciumsilikat) und 82,6 g Eisenoxid-Rotpigment der BAYER AG in 112 g Wasser suspendiert. Hierzu gab man unter Rühren 421,5 g der mit einem Entschäumer und einem Weichmacher konfektionierten aber noch nicht verdünnten Polymerdispersion. Vor ihrer Anwendung ließ man die Farbe 48 h bei Raumtemperatur reifen.
Die Farbe hatte eine Pigmentvolumenkonzentration von 42.

Zu Vergleichszwecken wurde ein konventioneller Betonstein ohne mineralische Beschichtung hergestellt und in der oben beschriebenen Weise mit Primer und Farbe beschichtet.

Außerdem wurden ein mit einer mineralischen Beschichtung versehener Betonstein hergestellt, wobei die mineralische Beschichtung nicht mit Polymer modifiziert war.

### III. Prüfung der Bewitterungseigenschaften:

1) Bestimmung des Schutzes von mineralischen Formkörpern vor Ausblühungen
Hierzu wurde ein nach II hergestellter Stein 7 d mit dem Gesicht auf ein 60°C warmes Wasserbad gelegt. Der Grad der Ausblühungen wurde visuell beurteilt. Hierfür wird folgende Notenskala zugrunde gelegt. Die Ergebnisse sind in Tabelle 2 zusammengefasst.
0 = keine Ausblühungen
1 = fast keine Ausblühungen
2 = leichte Ausblühungen
3 = mäßige Ausblühungen
4 = starke Ausblühungen
5 = sehr starke Ausblühungen
2) Bestimmung der Haftung der Beschichtung bei simulierter Feuchtbewitterung
Ein nach II hergestellter Betonstein wurde wie unter III 1) beschrieben 7d mit Wasserdampf behandelt. Anschließend wurde die Haftung der Beschichtung in den Bereichen, die dem Wasserdampf ausgesetzt waren, beurteilt. Hierzu wurde ein 10 cm langer und 3 cm breiter Streifen eines Klebebands (TESA^{™} der Fa. Beiersdorf AG) mit einer Gummirolle unter leichtem Druck auf die Beschichtung aufgebracht. Nach etwa 2 min wurde der Klebestreifen ruckartig entfernt. Die Menge der am Klebeband haftenden Bestandteile wurde visuell bewertet. Die Ergebnisse sind in Tabelle 2 zusammengefasst. Es wurde folgende Notenskala zugrunde gelegt:
0 = nicht vorhanden
1 = schwach erkennbar
2 = erkennbar
3 = auffallend
4 = stark auffallend
5 = sehr stark auffallend
3) Bestimmung der Frost-Tau-Beständigkeit
Zur Bestimmung der Frost/Tau-Beständigkeit wurden die beschichteten Betonsteine 5 Tage lang dem folgenden Prüfzyklus unterworfen: 5 h Lagerung bei 20°C in Wasser - 5 h Lagerung bei -20°C. Anschließend wurden die Probekörper eine Woche bei 70°C gelagert. Dies ist ein Zyklus. Anschließend wurden visuell die Schäden an der Beschichtung (Ablösungen, Haftung, Glanz) nach der folgenden Skala klassifiziert:
1 = schwach erkennbar
2 = gut erkennbar
3 = auffallend
4 = stark auffallend
5 = sehr stark auffallend
Die Ergebnisse der Tabelle 2 wurden nach 5 Zyklen bestimmt.
4) Bestimmung der Blasenbildungsneigung
Die Teststeine, die bereits nach 1) beurteilt sind, werden auch für die Bestimmung der Blasenbildungsneigung verwendet. Dabei wird die Bildung von Blasen visuell an sog. belasteten Stellen (s. o.) beurteilt. Die Ergebnisse sind in Tabelle 2 zusammengefasst. Hierfür wird folgende Notenskala zugrunde gelegt:
0 = nicht vorhanden
1 = schwach erkennbar
2 = gut erkennbar
3 = auffallend
4 = stark auffallend
5 = sehr stark auffallend

**Tabelle 3**

| Stein Nr.¹⁾ | V1 | V2 | 1 | 2 |
|---|---|---|---|---|
| Ausblühen | 2 | 2 | 1 | 1 |
| Haftung | 2 | 2 | 0 | 0 |
| Frost-Tau | 3 | 4 | 2 | 2 |
| Blasenbildung | 1 | 1 | 1 | 1 |

| | | | | |
|---|---|---|---|---|
| ¹⁾ V1: Betonstein ohne mineralische Beschichtung V2: Betonstein mit unmodifizierter mineralischer Beschichtung 1: Betonstein mit D1 modifizierter mineralischer Beschichtung 2: Betonstein mit D2 modifizierter mineralischer Beschichtung | | | | |

## Patentansprüche

1. Verwendung wässriger Polymerdispersionen, enthaltend:
A wenigstens ein Polymer P in Form dispergierter Polymerteilchen mit einer Glasübergangstemperatur im Bereich von -20 bis +80°C, das aufgebaut ist aus ethylenisch ungesättigten Monomeren M, umfassend:
i) 90 bis 99,9 Gew.-% wenigstens eines hydrophoben, monoethylenisch ungesättigten Monomers M1, ausgewählt unter Styrol, Butadien, den C₁-C₄-Alkylestern der Methacrylsäure und den C₂-C₁₂-Alkylestern der Acrylsäure und
ii) 0,1 bis 10 Gew.% wenigstens eines hydrophilen, monoethylenisch ungesättigten Monomeren M2, umfassend bis zu 2 Gew.%, bezogen auf die Gesamtmonomerenmenge, eines oder mehrerer monoethylenisch ungesättigter Monomere mit wenigstens einer Säuregruppe (Monomere M2a) und/oder bis zu 10 Gew.% davon verschiedene hydrophile Monomere M2b, und
B wenigstens ein Emulgatorsystem zur Stabilisierung der Polymerteilchen, enthaltend:
a) wenigstens ein Salz eines Schwefelsäurehalbesters eines alkoxylierten Alkohols, der wenigstens eine C₄-C₂₀-Alkylkette aufweist (Salz a); und
b) wenigstens einen alkoxylierten Alkohol, der wenigstens eine C₄-C₂₀-Alkylkette aufweist (Neutralverbindung b),
zur Modifizierung zementgebundener mineralischer Beschichtungen für Betondachsteine.

2. Verwendung nach Anspruch 1, wobei das Salz a ausgewählt ist unter den Natriumsalzen der Schwefelsäurehalbester von ethoxylierten C₈-C₁₆-Alkanolen mit einem mittleren Ethoxylierungsgrad von 2 bis 50.

3. Verwendung nach einem der Ansprüche 1 oder 2, wobei die Neutralverbindung b ausgewählt ist unter ethoxylierten C₈-C₁₆-Alkanolen mit einem mittleren Ethoxylierungsgrad von 5 bis 60.

4. Verwendung nach einem der vorhergehenden Ansprüche, wobei das Emulgatorsystem zusätzlich ein Salz eines FormaldehydKondensationsproduktes einer aromatischen Sulfonsäure umfasst, das ein zahlenmittleres Molekulargewicht < 1500 aufweist.

5. Verwendung nach einem der vorhergehenden Ansprüche, wobei die wässrige Polymerdispersion kein wasserlösliches Polymer mit einem zahlenmittleren Molekulargewicht > 1500 enthält.

6. Verwendung nach einem der vorhergehenden Ansprüche, wobei die wässrige Polymerdispersion frei ist von Ammoniak.

7. Verwendung nach einem der vorhergehenden Ansprüche, wobei die Monomere M1 Styrol und Butadien im Gewichtsverhältnis 3:1 bis 3:2 umfassen.

8. Verwendung nach einem der Ansprüche 1 bis 6, wobei das Polymer P als Monomer M1
- wenigstens ein Monomer M1a, ausgewählt unter Styrol und Methylmethacrylat, und
- wenigstens ein Monomer M1b, ausgewählt unter Ethylacrylat, n-Butylacrylat und 2-Ethylhexylacrylat
einpolymerisiert enthält, wobei das Gewichtsverhältnis von M1a:M1b im Bereich von 2:1 bis 1:2 liegt.

9. Verwendung nach einem der vorhergehenden Ansprüche, wobei die Monomere M2a ausgewählt sind unter monoethylenisch ungesättigten Monocarbonsäuren mit 3 bis 6 C-Atomen.

10. Verwendung nach einem der vorhergehenden Ansprüche, wobei die Monomere M2b ausgewählt sind unter α,β-monoethylenisch ungesättigten Nitrilen mit 3 bis 6 C-Atomen, den Amiden und den N-Methylolamiden monoethylenisch ungesättigter Carbonsäuren.

11. Verfahren zur Herstellung eines mit einer mineralischen Beschichtung versehenen Betondachsteins, umfassend die folgenden Schritte:
1.) Herstellung eines unbeschichteten Betondachsteinrohlings nach einem bekannten Verfahren,
2.) Aufbringen einer plastischen, zementgebundenen mineralischen Masse auf den noch feuchten Betondachsteinrohling, wobei die plastische, mineralische Masse Feinstsand, Zement, wenigstens ein anorganisches Buntpigment, wenigstens eine wässrige Polymerdispersion, übliche Hilfsmittel und Wasser in einer Menge enthält, die eine plastische Verformbarkeit der Masse gewährleistet, und
3.) Abbinden des Betondachsteins,
**dadurch gekennzeichnet, dass** die wässrige Polymerdispersion ausgewählt ist unter einer in den Ansprüchen 1 bis 10 definierten, wässrigen Polymerdispersion.

12. Verfahren nach Anspruch 11, **dadurch gekennzeichnet, dass** man das Verhältnis von Kunststoff zu Zement in der mineralischen Masse im Bereich von 1:5 bis 1:30 wählt.

13. Verfahren nach einem der Ansprüche 11 oder 12, **dadurch gekennzeichnet, dass** man während oder nach dem Abbinden des Betondachsteins wenigstens ein wässriges Beschichtungsmittel auf Basis einer wässrigen Polymerdispersion auf die mit der mineralischen Beschichtung versehene Oberfläche des Betondachsteins aufbringt.

14. Betondachstein mit einer mineralischen Beschichtung, erhältlich durch ein Verfahren nach einem der Ansprüche 11 bis 13.

15. Betondachstein nach Anspruch 14, wobei die mineralische Beschichtung eine Dicke von 1 bis 15 mm aufweist.

## Claims

1. The use of aqueous polymer dispersions comprising:
A at least one polymer P in the form of dispersed polymer particles with a glass transition temperature within the range from -20 to +80°C, the polymer having been built up from ethylenically unsaturated monomers M, comprising:
i) from 90 to 99.9% by weight of at least one hydrophobic, monoethylenically unsaturated monomer M1, selected among styrene, butadiene, the C₁-C₄-alkyl esters of methacrylic acid and the C₂-C₁₂-alkyl esters of acrylic acid, and
ii) from 0.1 to 10% by weight of at least one hydrophilic, monoethylenically unsaturated monomer M2 comprising up to 2% by weight, based on the total amount of monomer, of one or more monoethylenically unsaturated monomers having at least one acid group (monomers M2a), and/or comprising up to 10% by weight of other hydrophilic monomers M2b, and
B at least one emulsifier system for stabilizing the polymer particles and comprising:
a) at least one salt of a sulfuric half-ester of an alkoxylated alcohol which has at least one C₄-C₂₀-alkyl chain (salt a); and
b) at least one alkoxylated alcohol which has at least one C₄-C₂₀-alkyl chain (neutral compound b),
for modifying cement-bound mineral coatings for concrete roof tiles.

2. The use according to claim 1, where salt a has been selected among the sodium salts of sulfuric half-esters of ethoxylated C₈-C₁₆ alkanols with an average degree of ethoxylation of from 2 to 50.

3. The use according to claim 1 or 2, where the neutral compound b has been selected among ethoxylated C₈-C₁₆ alkanols with an average degree of ethoxylation of from 5 to 60.

4. The use according to any of the preceding claims, where the emulsifier system also includes a salt of a formaldehyde condensation product of an aromatic sulfonic acid, the salt having a number-average molecular weight < 1 500.

5. The use according to any of the preceding claims, where no water-soluble polymer with a number-average molecular weight > 1 500 is present in the aqueous polymer dispersion.

6. The use according to any of the preceding claims, where the aqueous polymer dispersion is free from ammonia.

7. The use according to any of the preceding claims, where the monomers M1 comprise styrene and butadiene in a ratio by weight of from 3:1 to 3:2.

8. The use according to any of claims 1 to 6, where the polymer P comprises, as monomer M1,
- at least one copolymerized monomer M1a selected among styrene and methyl methacrylate, and
- at least one copolymerized monomer M1b selected among ethyl acrylate, n-butyl acrylate and 2-ethylhexyl acrylate,
where the ratio M1a:M1b by weight is from 2:1 to 1:2.

9. The use according to any of the preceding claims, where the monomers M2a have been selected among monoethylenically unsaturated monocarboxylic acids having from 3 to 6 carbon atoms.

10. The use according to any of the preceding claims, where the monomers M2b have been selected among α,β-monoethylenically unsaturated nitriles having from 3 to 6 carbon atoms, and the amides and the N-methylolamides of monoethylenically unsaturated carboxylic acids.

11. A process for producing a mineral-coated concrete roof tile, comprising the following steps:
1.) producing an uncoated green concrete roof tile by a known process,
2.) applying a plastic, cement-bound mineral composition onto the green concrete roof tile while the tile is still moist, where the plastic mineral composition comprises very fine sand, cement, at least one inorganic color pigment, at least one aqueous polymer dispersion, conventional auxiliaries and water, in amounts ensuring that the composition has plastic deformability, and
3.) bringing about setting of the concrete roof tile,
which comprises selecting the aqueous polymer dispersion among aqueous polymer dispersions defined in any of claims 1 to 10.

12. The process according to claim 11, wherein the ratio selected of polymer to cement in the mineral composition is from 1:5 to 1:30.

13. The process according to claim 11 or 12, wherein, during or after the setting of the concrete roof tile, at least one aqueous coating material based on an aqueous polymer dispersion is applied to that surface of the concrete roof tile which has been provided with the mineral coating.

14. A concrete roof tile with a mineral coating, obtainable by a process according to any of claims 11 to 13.

15. The concrete roof tile according to claim 14, where the thickness of the mineral coating is from 1 to 15 mm.

## Revendications

1. Utilisation de dispersions aqueuses de polymères, contenant :
A au moins un polymère P sous forme de particules de polymère dispersées, d'une température de transition vitreuse de l'ordre de -20 à +80°C, constitué de monomères M éthyléniquement insaturés, comprenant :
i) de 90 à 99,9% en poids d'au moins un monomère M1 hydrophobe, monoéthyléniquement insaturé, choisi parmi le styrène, le butadiène, les esters alkyliques en C₁ à C₄ de l'acide méthacrylique et les esters alkyliques en C₂ à C₁₂ de l'acide acrylique et
ii) de 0,1 à 10% en poids d'au moins un monomère M2 hydrophile, monoéthyléniquement insaturé, comprenant jusqu'à 2% en poids, par rapport à la quantité totale de monomères, d'un ou plusieurs monomères monoéthyléniquement insaturés possédant au moins un groupe acide (monomères M2a) et / ou jusqu'à 10% en poids de monomères hydrophiles M2b différents d'eux, et
B au moins un système émulsifiant pour la stabilisation des particules de polymère, contenant :
a) au moins un sel d'un semi-ester d'acide sulfurique et d'un alcool alcoxylé, présentant au moins une chaîne alkyle en C₄ à C₂₀ (sel a), et
b) au moins un alcool alcoxylé, présentant au moins une chaîne alkyle en C₄ à C₂₀ (composé neutre b),
pour la modification d'enduits minéraux à liant de ciment pour des tuiles en béton.

2. Utilisation selon la revendication 1, où le sel a est choisi parmi les sels de sodium des semi-esters d'acide sulfurique et d'alcanols éthoxylés en C₈ à C₁₆ d'un degré moyen d'éthoxylation de 2 à 50.

3. Utilisation selon l'une quelconque des revendications 1 ou 2, où le composé neutre b est choisi parmi des alcanols éthoxylés en C₈ à C₁₆ d'un degré moyen d'éthoxylation de 5 à 60.

4. Utilisation selon l'une quelconque des revendications qui précèdent, où le système émulsifiant comprend en outre un sel d'un produit de condensation de formaldéhyde d'un acide sulfonique aromatique, qui présente une moyenne numérique de poids moléculaire de moins de 1500.

5. Utilisation selon l'une quelconque des revendications qui précèdent, où la dispersion aqueuse de polymères ne contient pas de polymère soluble dans l'eau d'une moyenne numérique de poids moléculaire de plus de 1500.

6. Utilisation selon l'une quelconque des revendications qui précèdent, où la dispersion aqueuse de polymères est exempte d'ammoniac.

7. Utilisation selon l'une quelconque des revendications qui précèdent, où les monomères M1 comprennent du styrène et du butadiène en proportion molaire de 3 : 1 à 3 : 2.

8. Utilisation selon l'une quelconque des revendications 1 à 6, où le polymère P contient en tant que monomère M1, à l'état copolymérisé,
- au moins un monomère M1a, choisi parmi du styrène et du méthacrylate de méthyle, et
- au moins un monomère M1b, choisi parmi l'acrylate d'éthyle, l'acrylate de n-butyle et l'acrylate de 2-éthylhexyle,
le rapport pondéral M1a: M1b étant de l'ordre de 2 : 1 à 1 : 2.

9. Utilisation selon l'une quelconque des revendications qui précèdent, où les monomères M2a sont choisis parmi des acides monocarboxyliques monoéthyléniquement insaturés comportant de 3 à 6 atomes de C.

10. Utilisation selon l'une quelconque des revendications qui précèdent, où les monomères M2b sont choisis parmi des nitriles α,β-monoéthyléniquement insaturés comportant de 3 à 6 atomes de C, les amides et les N-méthylolamides d'acides carboxyliques monoéthyléniquement insaturés.

11. Procédé de préparation d'une tuile en béton munie d'un enduit minéral, comprenant les étapes suivantes :
1.) préparation d'une ébauche de tuile de béton non enduite par un procédé connu,
2.) application d'une masse minérale plastique à liant de ciment sur l'ébauche de tuile en béton encore humide, la masse plastique minérale contenant du sable fin, du ciment, au moins un pigment de couleur inorganique, au moins une dispersion aqueuse de polymère, des adjuvants usuels et de l'eau, en une quantité garantissant une déformabilité plastique de la masse, et
3.) durcissement de la tuile en béton,
**caractérisé en ce que** la dispersion aqueuse de polymères est choisie parmi l'une des dispersions aqueuses de polymères définies dans les revendications 1 à 10.

12. Procédé selon la revendication 11, **caractérisé en ce que** l'on choisit la proportion de matière synthétique au ciment dans la masse minérale dans une plage de 1 : 5 à 1 : 30.

13. Procédé selon l'une quelconque des revendications 11 ou 12, **caractérisé en ce que**, pendant ou après le durcissement de la tuile en béton, on applique au moins un agent d'enduisage aqueux, à base d'une dispersion aqueuse de polymères, sur la surface de la tuile en béton munie de l'enduit minéral.

14. Tuile en béton munie d'un enduit minéral, que l'on peut obtenir par un procédé selon l'une quelconque des revendications 11 à 13.

15. Tuile en béton selon la revendication 14, où l'enduit minéral présente une épaisseur de 1 à 15 mm.
